Europäisches Patentamt

European Patent Office

Office européen des brevets

(11) Publication number: **0 163 296**
**A2**

(12) # EUROPEAN PATENT APPLICATION

(21) Application number: **85106597.9**

(22) Date of filing: **29.05.85**

(51) Int. Cl.⁴: **F 16 C 11/06**
**F 16 C 23/08**

(30) Priority: **30.05.84 JP 108408/84**

(43) Date of publication of application:
**04.12.85 Bulletin 85/49**

(84) Designated Contracting States:
**CH DE FR GB IT LI NL SE**

(71) Applicant: **HITACHI, LTD.**
**6, Kanda Surugadai 4-chome Chiyoda-ku**
**Tokyo 100(JP)**

(72) Inventor: **Yukita, Hisashi**
**522, Boda Apartment House**
**2593, Takaba Katsuta-shi(JP)**

(72) Inventor: **Kanamaru, Hisanobu**
**3449-7, Higashiishikawa**
**Katsuta-shi(JP)**

(72) Inventor: **Sasaya, Kazushi**
**542, Boda Apartment House**
**2592, Takaba Katsuta-shi(JP)**

(74) Representative: **Patentanwälte Beetz sen. - Beetz jun.**
**Timpe - Siegfried - Schmitt-Fumian**
**Steinsdorfstrasse 10**
**D-8000 München 22(DE)**

(54) Spherical bearing.

(57) A spherical bearing has a bearing member (1;11) constituted by a main member (1A;11A) having a bore for receiving a spherical member (2;12), and a stopper member (1B;11B) received in an annular recess (1C) formed around one open end of the bore and adapted for preventing the spherical member (2;12) from coming off. The annular recess (IC) is provided in the peripheral wall thereof with anchoring lugs (1D;11D) for anchoring the stopper member (1B;11B). In assembling, the spherical member (2;12) is received in the bore in the main member (1A;11A) and the stopper member (1B;11B) is placed in the annular recess (1C). Then, the stopper member is pressed such as to be plastically deformed locally thereby filling the grooves between the anchoring lugs (1D;11D), whereby the stopper member (1B;11B) is jointed to the main member (1A;11A) with the high compacting force and the shearing strength of the deformed material.

F I G . I

SPHERICAL BEARING

## BACKGROUND OF THE INVENTION

The present invention relates to a spherical bearing and, more particularly, to a self-centering spherical bearing having a high assembly precision and suited for use in rotary machines.

Spherical bearings are widely used in various machine parts such as ball joints and rotary joints, as well as in various types of rotary machines.

Considering that the spherical bearing employs a spherical member having a spherical surface, specific attention has to be paid in the production of this type of bearing, in order to attain both the satisfactory function or performance of the bearing and high production efficiency.

For instance, Japanese Utility Model Laid-Open No. 40617/1983 discloses a joint incorporating a spherical bearing which is produced by placing a spherical member in a tubular bearing member and then plastically deforming the bearing member in conformity with the spherical surface of the spherical member. It is, however, quite difficult to plastically deform the bearing member such as to maintain a desired bearing clearance between the bearing member and the spherical member, so that the desired slidability between the spherical member and the bearing member is often failed.

Japanese Utility Model Laid-Open No. 113711/1982 discloses another method of producing a spherical bearing. In this method, one of the end openings of the bearing member has a diameter greater than that of the spherical member. After inserting the spherical member into the bearing member through this end opening, a ballseat is fitted into the bearing member and then a stopper member is inserted to prevent the ball seat from coming off. Finally, the ball seat is fixed to the bearing member by being caulked through the stopper member. The spherical bearing assembled by this method requires an impractically large number of parts and cannot provide sufficient resistance to a force which tends to force the spherical member of the bearing member because the fixing is made by caulking solely. The same problems are encountered even when the ball seat is directly caulked to the bearing member without the intermediary of the stopper member.

Still another method is disclosed in the specification of United States Patent No. 4,109,364. This method, however, encounters a problem in difficulty in the machining of the socket portion in conformity with the spherical member and, therefore, cannot provide sufficiently high assembly precision.

SUMMARY OF THE INVENTION

An object of the invention is to provide a

- 3 -

0163296

spherical bearing which is compact in construction and which has a high mechanical strength.

Another object of the invention is to provide a spherical bearing which can be assembled easily at a high precision.

To this end, according to the invention, there is provided a spherical bearing comprising a main member having an axial bore opened at its both ends; a spherical member received in the axial bore, and a stopper member inserted into the axial bore from one end opening thereof, the stopper member being plastically deformable such as to be jointed at its outer perphery to the main member and to fit on the surface of the spherical member at its inner periphery.

BRIEF DESCRIPTION OF THE DRAWINGS

Fig. 1 is a sectional view of a spherical bearing embodying the invention in the assembled state taken along the axis thereof;

Fig. 2 is an enlarged view of an essential part of Fig. 1;

Figs. 3a to 3c are exploded views of the spherical bearing shown in Fig. 1;

Fig. 4 is a sectional view of the spherical bearing of the invention in a first step of the assembly process;

Fig. 5 is a sectional view of the bearing in a second step of the assembly process;

Fig. 6 is a front elevational view of another embodiment of the spherical bearing of the invention; and

Fig. 7 is a sectional view taken along the line VII-VII of Fig. 6.

DESCRIPTION OF THE PREFERRED EMBODIMENTS

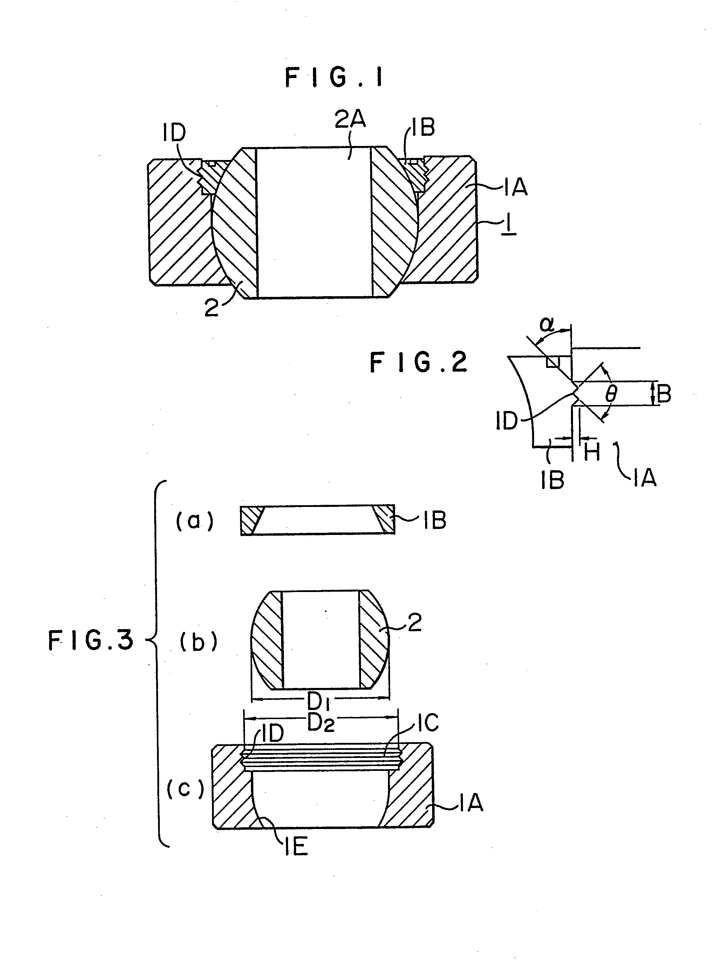

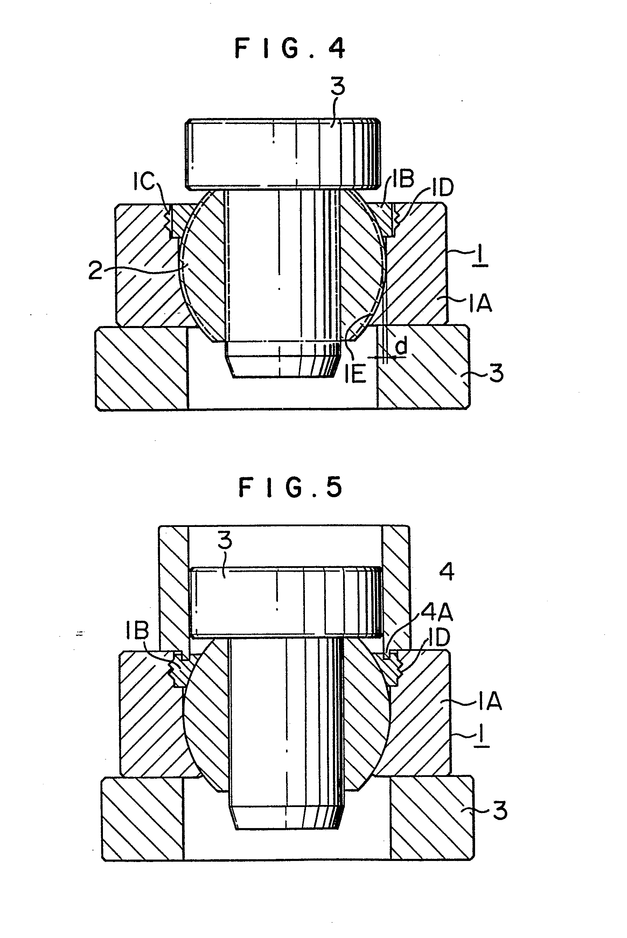

A first embodiment of the invention will be described hereinunder with reference to Figs. 1 to 4.

The spherical bearing in accordance with a first embodiment of the invention has a bearing member 1 which is constituted by a doughnut-shaped main member 1A made of an SS steel or a molybdenum steel (SCM steel) and an annular stopper member 1B made of copper or aluminum. The spherical bearing further has a spherical member 2 made of a bearing steel or an SUJ steel and is adapted to be received in the bore formed in the bearing member 1 such that a slight gap is formed between the outer surface of the spherical member 2 and the spherical surface 1E defining the bore in the bearing member 1. The spherical member 1 has a central bore 2A for receiving a shaft.

In the assembled state, the stopper member 1B is received in a predetermined recess 1C (see Fig. 3C) formed in the brim of one axial end opening of the main member 1A and, as will be described later, fills up this recess 1C by being plastically deformed such that its outer peripheral surface has a configuration which mates anchoring lugs 1D formed on the wall of the recess 1C.

The maximum diameter $D_1$ of the spherical member 2 is selected to be smaller than the inside diameter $D_2$ of the recess 1C, i.e., such as to meet the condition of $D_1 < D_2$.

As mentioned before, the recess 1C is effectively filled by the stopper member 1B by plastic flow of the material of the stopper member 1B. In order to attain a firm engagement between the stopper member 1B and the recess 1C, the anchoring lugs 1D mentioned before are formed beforehand on the wall of the recess 1C in the form of W-shaped ridges and grooves.

Referring to Fig. 2, the radial depth H of the grooves is selected to range between 0.1 and 1 mm, preferably between 0.2 and 0.6 mm. It will be seen that a too small depth H will allow a plastic doformation of the ridges on the stopper member 1B mating with the ridges on the main member 1A by a small axial force, thus reducing the shearing strength. The breadth B of the anchoring lugs is suitably selected in view of the factors such as the shearing strength necessitated in the connection. A too large breadth, however, is not preferred because in such a case the loss of power due to friction of the material to be deformed is increased because of a large distance between the end of the upper die (punch) and the distal end of the lugs.

The plastic flow of the material of the stopper

0163296

member into the grooves is largely affected by the angle formed between the side wall of the recess 1C and the line which connects the radially inner end of the annular region on which the lower end of a later-mentioned upper die acts and the upper edge of the groove in the side wall of the recess 1C. This angle will be referred to as "inclination angle", hereinunder. If this inclination angle is too large, the strength of connection between the stopper member 1b and the main member 1A is reduced due to a too large voids in the grooves. Conversely, a too small inclination angle reduces the anchoring force acting between the flanks of the grooves and the material filling the grooves. An experiment showed that a good effect is obtained when this inclination angle is selected to range between 20 and 70°, more preferably between 30 and 60°. The number of the anchoring lugs 1D is preferably 1 to 3. The strength of connection is maximized when the apex angle $\theta$ of the anchoring lug 1D is around 110°. Practically, however, the apex angle is selected to range between 80 and 130°. If the apex angle $\theta$ is too small, the apex of the lug is deformed in the direction of the pressing force such as to allow a generation of voids behind the lug.

As to the height of the anchoring lug 1D, a too large height will increase the resistance during the flow of the material into the groove, particularly into the groove portion just behind the lug, whereas a too small height cannot provide appreciable anchoring effect due to small connecting force. In such a case, it is meaningless to provide the anchoring lugs.

Practically, the height of the anchoring lug is selected in relation to the groove depth H such as to range between 0.38H and 1.0H, preferably between 0.5H and 0.88H.

The spherical bearing having the described embodiment can be produced in accordance with a process which will be explained hereinunder with reference to Figs. 4 and 5.

First of all, the main member 1A of the bearing member is placed in a hollow die 3 such that the recess 1C for receiving the stopper member is directed upwardly, and then the spherical member 2 is inserted into the bore of the main member 1A from the upper side. Since the bore in the main member 1A has a spherical peripheral wall conforming with the sphere of the spherical member 2, the spherical member is seated at a predetermined position, such as to leave therebetween the recess 1C for receiving the stopper member 1B. Then, after placing the preformed stopper member 1B in the recess 1C, a T-shaped punch 3 having a diameter slightly greater than the inside diameter of the bore 2A in the spherical member 2 is forcibly driven into this bore 2A such as to cause a radial expansion of the spherical member thereby bringing the outer surface of the spherical member into close contact with the inner peripheral surface 1E of the main member 1A.

Then, as shown in Fig. 5, the upper die 4 mentioned before and having an annular form is lowered while being guided by the outer peripheral surface of an upper portion of the punch 3 so that an annular tooth 4A presses vertically downwardly the aforementioned annular region on the upper surface of the stopper member 1B adjacent the anchoring lugs 1D. In consequence, the material of the stopper member 1B plastically flows radially outwardly to fill up the grooves between the anchoring lugs 1D such that the material of the stopper member 1B are firmly anchored by the anchoring lugs 1D, as well as radially inwardly such that the inner peripheral surface of the stopper member 1B conforms with the outer surface of the spherical member 2. Consequently, the stopper member 1B is fixed to the main member 1A with high compacting force and shearing strength, while making close contact with the spherical member 2.

Then, as the upper die 4 and the punch 3 are withdrawn, the spherical member 2, which has been expanded radially, naturally contracts to resume the original shape and size. In this state, a slight gap d is formed between the spherical member 2 and the bearing member 1 such as to allow a smooth sliding and rotation of the spherical member 2 in the bearing member 1.

As will be understood from the foregoing description, the spherical bearing of the invention can be produced easily at a high yield partly because there is not restriction concerning the shape of the bearing member and partly because the spherical member can be fitted without difficulty. The fact that the bearing member has to be machined only at one side thereof further contributes to the easy assembly of the spherical bearing.

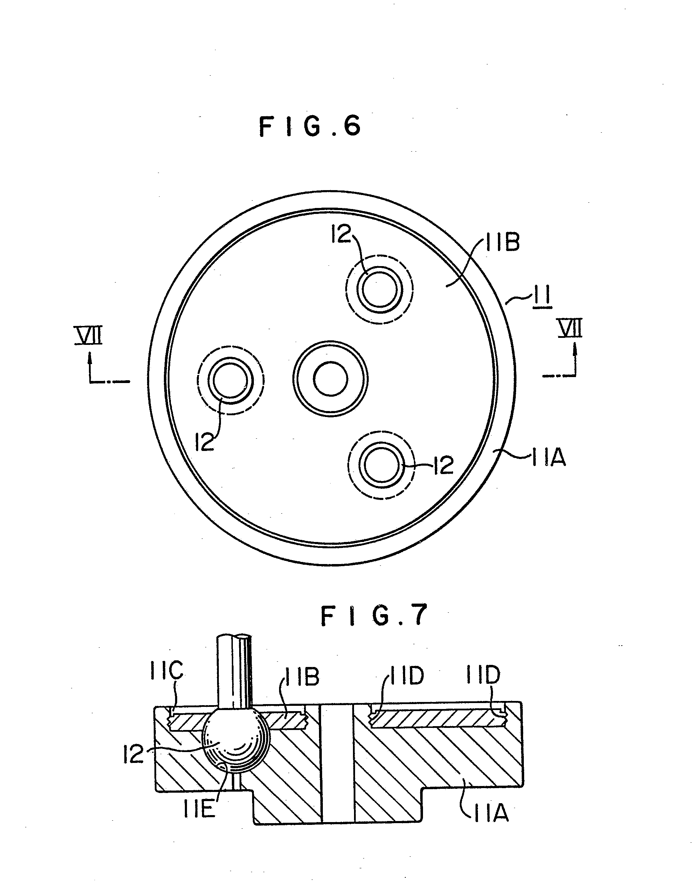

Figs. 6 and 7 show another embodiment of the invention applied to a ball socket joint which is used, for example, in a piston of a compressor.

In this embodiment, a bearing member 11 is constituted by a main member 11A which constitutes a ball holder, a plurality of spherical recesses 11E formed in one side of the main member on a circle concentric with the main member 11A at a constant circumferential pitch, and stopper members 11B fitting in flat recesses 11C around respective spherical recesses 11E such as to retain spherical members 12 received in respective spherical recesses 11E. In the assembly, each stopper member 11B is pressed by a die at its portion near anchoring lugs 11D formed on the peripheral wall of the recess so that the material of the stopper member 11B is plastically deformed to fill the grooves between the anchoring lugs 1D so that the stopper member 11B is firmly connected to the main member 11A with a high compacting force and high shearing strength, as in the case of the first embodiment.

WHAT IS CLAIMED IS

1.    A spherical bearing having a spherical member (2;12) having a spherical outer peripheral surface, and a bearing member (1;11) which rotably holds said spherical member (2;12) wherein the improvement comprises that said bearing member includes:

a main member (1A;11A) having at least one bore for receiving said sperical member (2;12);

an annular recess (1C) formed around one open end of said bore in said main member (1A;11A) and adapted to receive a stopper member (1B;11B), said annular recess (1C) having anchoring lugs (1D;11D) formed on the peripheral wall thereof; and

said stopper member (1B;11B) received by said annular recess (1C) and having an outer peripheral portion filling the grooves between said anchoring lugs (1D;11D) and an inner peripheral surface opposing the outer surface of said spherical member (2;12) with a slight gap left therebetween such as to allow a sliding motion of said spherical member (2;12).

2.    A spherical bearing according to claim 1, wherein said annular recess (1C) for receiving said stopper member (1B) is coaxial with said spherical member (2).

3.    A spherical bearing according to claim 1, wherein said annular recess (1C) for receiving said stopper member (1B) is coaxial with said main member (1).

4.    A spherical bearing according to claim 1, wherein said annular recess (1C) for receiving said spherical member (2) has a bottom surface merging in said bore in said main member (1A).

5. A spherical bearing according to claim 1, wherein said anchoring lugs (1D) are formed to provide a plurality of annular grooves therebetween.

6. A spherical bearing according to claim 1, wherein said stopper member (1B) has been pressed vertically downwardly such as a part or the material of said stopper member (1B) is plastically deformed such as to fill the spaces between said anchoring lugs (1D).

7. A spherical bearing according to claim 1, wherein said spherical member is a ball(12).

8. A spherical bearing according to claim 3 or 7, wherein said main member (11A) has a plurality of bores for receiving respective spherical members(12).

# FIG.1

# FIG.2

# FIG.3

(a)

(b)

(c)

0163296

# F I G . 4

# F I G . 5

# FIG.6

# FIG.7